# EUROPÄISCHE PATENTANMELDUNG

(11) **EP 3 278 954 A1**
(43) Veröffentlichungstag der Anmeldung: **07.02.2018**
(21) Anmeldenummer: 17164899.1
(22) Anmeldetag: 05.04.2017
(51) Int. Cl.: B29C 51/08, B65B 9/02, B65B 41/14, B65H 20/16

(54) **TIEFZIEHVERPACKUNGSMASCHINE MIT HALTELEISTE**

(30) Priorität: 04.08.2016 DE 102016214431
(71) Anmelder: MULTIVAC Sepp Haggenmüller SE & Co. KG, 87787 Wolfertschwenden (DE)
(72) Erfinder: LAUTH, Frank, 87787 Wolfertschwenden/Niederdorf (DE)
(74) Vertreter: Grünecker Patent- und Rechtsanwälte PartG mbB

(57) **Zusammenfassung**

Die erfindungsgemäße Tiefziehverpackungsmaschine (1) umfasst eine Abrollvorrichtung (3) für eine Unterfolienbahn (4) und eine Folientransportvorrichtung (5) zum intermittierenden Transport der Unterfolienbahn (4) mittels Klammerketten (6) in einer Produktionsrichtung (P). Sie zeichnet sich dadurch aus, dass eine Halteleiste (10) für die Unterfolienbahn (4) im Einzugsbereich (B) der Klammerketten (6) vorgesehen ist, die dazu konfiguriert ist, einen Teil eines freien vorderen Endes (E) einer neu zuzuführenden Unterfolienbahn (4) zu halten, während und/oder bis die Unterfolienbahn (4) von den Klammerketten (6) erfasst und transportiert wird.

## Beschreibung

Die Erfindung bezieht sich auf eine Tiefziehverpackungsmaschine gemäß dem Anspruch 1.

Aus der EP 126878 A1 ist eine Tiefziehverpackungsmaschine mit Klammerketten zum Transport einer Unterfolienbahn bekannt. Die Klammerketten erfassen eine neu zugeführte Unterfolienbahn am vorderen Ende der Tiefziehverpackungsmaschine. Dabei wird das vordere freie Ende der Unterfolienbahn händisch zugeführt, wobei eine Umlenkvorrichtung für die Ausrichtung der Unterfolienbahn an die geöffneten Klammern der Klammerkette sorgt. Dieser Einzugsbereich für die Unterfolienbahn ist gegen Zugriff durch den Bediener in das Maschineninnere mit Schutzabdeckungen versehen. Es können Folien mit unterschiedlichen Dicken eingesetzt werden, die unterschiedliches Verhalten beim Einführen in die Maschine aufweisen. Daher ist es üblich und meist auch notwendig, dass der Bediener mit einer Hand die Unterfolienbahn nach dem Einschieben in dieser Lage hält, damit die Klammerkette beim nächsten Vorschub die Unterfolienbahn erfassen kann. Hierbei besteht die Gefahr des Hineinziehens von Fingern in die für die Folienbahn vorgesehene schmale Öffnung und es ist unergonomisch, da der Bediener mit seiner anderen freien Hand den Taster für den Vorschub der Klammerketten drücken muss. Das Starten der Bewegung der Klammerketten folgt nicht immer sofort, sondern kann je nach Zustand der Maschine später und damit unerwartet erfolgen.

Aufgabe der Erfindung ist es, eine Tiefziehverpackungsmaschine zur Verfügung zu stellen, die das Einführen einer neuen Unterfolienbahn für den Bediener verbessert.

Diese Aufgabe wird gelöst durch eine Tiefziehverpackungsmaschine mit den Merkmalen des Anspruchs 1.

Die erfindungsgemäße Tiefziehverpackungsmaschine umfasst eine Abrollvorrichtung für eine Unterfolienbahn und eine Folientransportvorrichtung zum intermittierenden Transport der Unterfolienbahn mittels Klammerketten in einer Produktionsrichtung. Die Tiefziehverpackungsmaschine zeichnet sich erfindungsgemäß dadurch aus, dass eine Halteleiste für die Unterfolienbahn im Einzugsbereich der Klammerketten vorgesehen ist, die dazu konfiguriert ist, beim Starten der Maschine oder beim Einlegen einer neuen Unterfolie einen Teil eines freien vorderen Endes der neu zuzuführenden Unterfolienbahn zu halten, während und/oder bis die Unterfolienbahn von den Klammerketten erfasst und transportiert wird. So muss der Bediener die Unterfolienbahn nicht manuell bis zum nächsten Folienvorschub in der dafür notwendigen Position halten und das Risiko wenigstens eines teilweisen Einziehens von Fingern in die Öffnung am Maschinengestell wird ausgeschlossen. Für den Bediener sind damit zwei aufeinanderfolgende Abläufe vorgesehen: zum Ersten das Zuführen der neuen Folie bis zur Halteleiste und anschließend zum Zweiten das Auslösen eines Folienvorschubs.

Vorzugsweise weist die Halteleiste wenigstens eine Haltetasche auf, die mit einem Unterdruckerzeuger verbunden ist, um einen die Haltetasche abdeckenden Abschnitt der Unterfolienbahn mittels Unterdruck an der Halteleiste zu halten.

Zwischen dem Unterdruckerzeuger und der Halteleiste ist bevorzugt ein Ventil vorgesehen, so dass eine oder mehrere Haltetaschen von dem Unterdruck getrennt und zugeschaltet werden können, auch in sehr kurzer Zeit.

In einer vorteilhaften Ausführung ist die Haltetasche als längliche Nut ausgeführt, um eine ausreichend große Haltefläche und damit auch Haltekraft auf die Folie ausüben zu können. So können auch relativ starre Folien mit einer Stärke bis zu ca. 500 µm gehalten werden.

Bevorzugt ist ein Niederhalter zum Führen der Unterfolienbahn an die Haltetasche der Halteleiste hin vorgesehen, um die Folie möglichst nahe an die Halteleiste zu bringen und damit das Ansaugen der Folie prozesssicherer zu gestalten.

Es ist vorzugsweise eine beidseitige Umlenkführung zum Zuführen der Unterfolienbahn in Produktionsrichtung stromaufwärts der Halteleiste vorgesehen, was den Vorteil mit sich bringt, dass der Bediener die Folie an der Umlenkführung zuführen muss und die Folie über die Umlenkführung und den Niederhalter bis an die Halteleiste geführt ist.

Bevorzugt umfasst die Halteleiste eine um wenigstens eine Haltetasche umlaufende Dichtung, um das Halten der Folie zu unterstützen und die Haltekraft durch die Minimierung von Fehlluft zu maximieren.

Im Folgenden wird ein vorteilhaftes Ausführungsbeispiel der Erfindung anhand einer Zeichnung näher dargestellt. Im Einzelnen zeigen:
- Fig. 1: eine Seitenansicht einer erfindungsgemäßen Tiefziehverpackungsmaschine,
- Fig. 2: einen vergrößerten Ausschnitt aus Fig. 1,
- Fig. 3: einen vergrößerten Ausschnitt mit der Halteleiste,
- Fig. 4: eine Draufsicht auf die Halteleiste und
- Fig. 5: eine Draufsicht auf eine alternative Ausführung der Halteleiste.

Gleiche Komponenten sind in den Figuren durchgängig mit gleichen Bezugszeichen versehen.

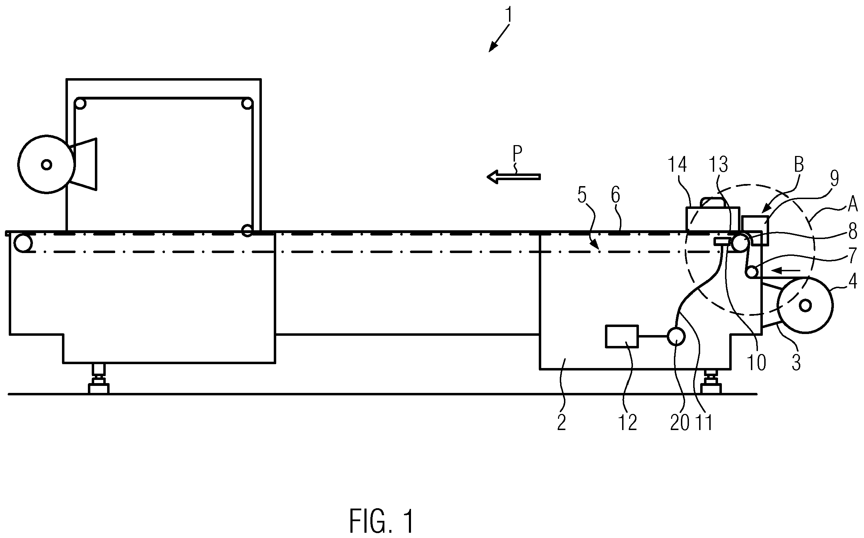

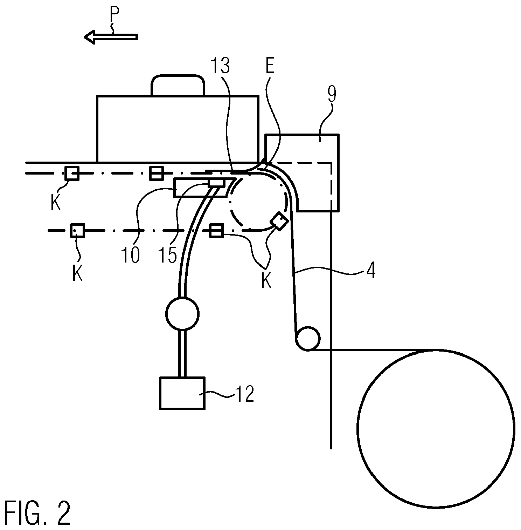

Figur 1 zeigt eine schematische Seitenansicht einer erfindungsgemäßen Tiefziehverpackungsmaschine 1 mit einem Maschinengestell 2, einer Abrollvorrichtung 3 für eine Unterfolienbahn 4 und einer Folientransportvorrichtung 5 mit zwei Klammerketten 6, deren Verlauf schematisch als Strich-Punkt-Linie dargestellt ist. Die Unterfolienbahn 4 wird einer Rolle abgezogen und über eine Umlenkrolle 7 nach oben zu den Klammerketten 6 geführt. Die Unterfolienbahn 4 wird zwischen einer Umlenkvorrichtung 8 und einer Führungsvorrichtung 9 in eine annähernd horizontale Ausrichtung parallel zum oberen Kettentrum der Klammerketten 6 gebracht, um von den Klammern K der Klammerketten 6 (siehe Fig. 2) beidseitig erfasst zu werden. Als Einzugsbereich B der Klammerketten 6 ist der Bereich des oberen Kettentrums, der in Produktionsrichtung P bewegt wird, definiert, in dem die Klammern K zum Erfassen der Unterbahnfolie 4 geöffnet und wieder geschlossen werden. Im geschlossenen Zustand, d. h. stromabwärts des Einzugsbereichs B, ist die Unterbahnfolie 4 fest von den Klammerketten 6 beidseitig gehalten.

In dem Bereich 10, in dem die nicht näher dargestellten und zuvor geöffneten Klammern der Klammerketten 6 schließen, wie dies auch gemäß dem Stand der Technik in der EP 126878 A1 näher beschrieben ist, ist eine Halteleiste 10 vorgesehen, die über eine Leitung 11 mit einem Unterdruckerzeuger 12 verbunden ist. Die Wirkweise der Halteleiste 10 ist in den folgenden Figuren näher erläutert. Der Führungsvorrichtung 9 in Produktionsrichtung P nachfolgend ist ein Niederhalter 13 vorgesehen, um das vordere Ende der neuen Unterfolienbahn 4 beim Einschieben an die Halteleiste 10 heranzuführen. Die Führungsvorrichtung 9 kann am Maschinengestell 2 oder an einer Schutzabdeckung 14, die oberhalb des Bereichs 10 aufliegt und diesen gegen einen unerlaubten Zugriff schützt, angeordnet sein.

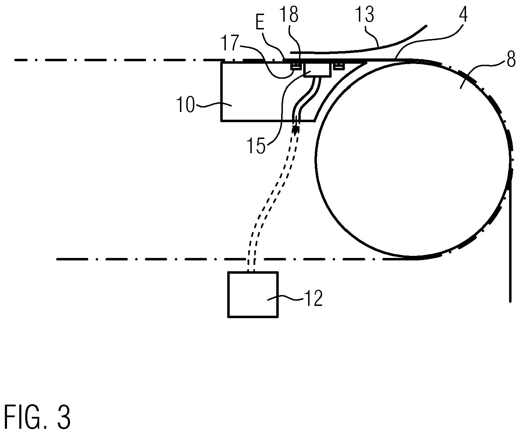

Fig. 2 zeigt einen vergrößerten Ausschnitt A aus Fig. 1 in einer Stellung, bei der das vordere Ende E der neuen Unterfolienbahn 4 entlang der Führungsvorrichtung 9 bis unter den Niederhalter 13 geschoben wurde. Die Halteleiste 10 weist wenigstens eine Tasche 15 auf, die mit dem Unterdruckerzeuger 12 verbunden ist, um die Unterfolienbahn 4 an die Oberseite der Halteleiste 10 ansaugen und damit halten zu können, nachdem die Unterfolienbahn 4 über die Tasche 15 hinaus in Produktions- richtung P geschoben wurde, wie in Fig. 3 dargestellt.

Fig. 3 zeigt einen vergrößerten Ausschnitt der Fig. 2 mit an die Halteleiste 10 angesaugter Unterfolienbahn 4. Mit dem Pfeil ist die Richtung der Saugwirkung durch den Unterdruckerzeuger 12 dargestellt. Der Unterdruckerzeuger 12 kann beispielsweise eine Vakuumpumpe, ein Sauglüfter oder eine Venturidüse sein. Der Niederhalter 13 ist derart gestaltet, dass das Folienende E beim manuellen Einschieben durch den Bediener immer näher an die Halteleiste 10 herangeführt wird, damit die Sogwirkung an der Haltetasche 15 ausreicht, die Unterfolienbahn 4 anzusaugen und auf der Halteleiste 10 zu halten. Optional kann eine um die Haltetasche 15 umlaufende Nut 17 vorgesehen sein, in die eine Dichtung 18 eingelegt ist, die etwas über die Oberfläche der Halteleiste 10 hinaussteht. Vorzugsweise ist die Dichtung 18 als Silikondichtung oder als Rundschnur beispielsweise aus Moosgummi, ausgeführt.

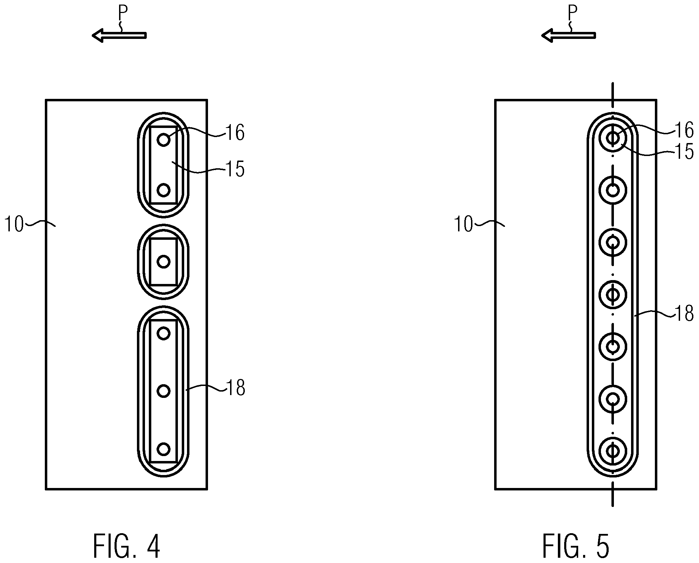

Fig. 4 zeigt eine Draufsicht einer vorteilhaften Ausführung der Halteleiste 10 mit mehreren Haltetaschen 15, die jeweils als eine schmale Nut ausgeführt sind und eine oder mehrere Unterdrucköffnungen 16 aufweisen, über die eine Sogströmung und ein Unterdruck erzeugt wird. Um die Haltetaschen 15 ist die um die Tragtasche 15 umlaufende Dichtung 18 gezeigt.

Fig. 5 zeigt eine alternative Ausführung der Halteleiste 10 mit rund ausgebildeten Haltetaschen 15, die entlang einer orthogonal zur Produktionsrichtung P ausgerichteten Linie angeordnet sind. Jede Haltetasche 15 ist über eine eigene Unterdrucköffnung 16 mittels der Leitung 11 mit dem Unterdruckerzeuger 12 verbunden. Es können auch nicht näher dargestellte Ventile vorgesehen sein, um einzelne oder mehrere Taschen 15 von der Unterdruckquelle 11 zu trennen, wenn eine Unterfolienbahn 4 mit einer geringeren Breite eingeführt wird und dabei nicht alle Haltetaschen 15 von der Unterfolienbahn 4 bedeckt werden. Um alle Haltetaschen 15 herum ist eine gemeinsame, umlaufende Dichtung 18 dargestellt.

Unter der Erfindung sind auch Ausführungen einer Halteleiste 10 erfasst, die aus einer Kombination der in Fig. 4 und 5 gezeigten Halteleisten 10 besteht.

Es ist auch eine Ausführung der erfindungsgemäßen Tiefziehverpackungsmaschine 1 denkbar, bei der die Halteleiste 10 oberhalb der zugeführten Unterfolienbahn 4 und der "Niederhalter" 13 unterhalb der Unterfolienbahn 4 ist, so dass er diese nach oben gegen die Halteleiste 10 anhebt.

Der Ablauf zu Produktionsbeginn mit einer neu zuzuführenden Unterfolienbahn 4 wird wie folgt dargestellt. Der Unterdruckerzeuger 12 wird eingeschaltet oder über ein Ventil 20 zugeschaltet, so dass an den gewünschten Halte- taschen 15 der Halteleiste 10 eine Unterdruckwirkung vorliegt. Die Unterfolienbahn 4 wird nun entlang der Führungsvorrichtung 9 bis hin zur Halteleiste 10 geschoben, so dass die Unterfolienbahn über die Taschen 15 ragt. Durch das Hinführen der Unterfolienbahn 4 mittels des Niederhalters 13 an die Halteleiste 10 und die Haltetasche 15 wird die Unterfolienbahn 4 an die Halteleiste 10 angesaugt und dort durch den anliegenden Unterdruck gehalten. Der Bediener kann nun die Hände von der Folie 4 entfernen und den Vorschubstart aktivieren. Nachdem die Klammerketten 6 sich in Produktionsrichtung P bewegen und dabei die Klammern K geschlossen werden, wird die Unterfolienbahn 4 beidseitig erfasst und in Produktionsrichtung P befördert. Dabei löst sich die Unterfolienbahn 4 von den Haltetaschen 15 und der Unterdruckerzeuger 12 wird abgeschaltet oder die Haltetasche 15 wird vom Unterdruck mittels Ventil 20 getrennt. Hier kann eine sogenannte Haltezeit in einer Steuerung der Tiefziehverpackungsmaschine 1 hinterlegt sein, die den Abschaltpunkt für den Unterdruck steuert. Vorteilhaft ist auch eine Einstellvorrichtung für die Höhe des Unterdrucks, um auf verschiedene Unterfolienbahnen 4 reagieren zu können und das Losreißmoment beim Vorschubstart einstellen zu können.

## Patentansprüche

1. Tiefziehverpackungsmaschine (1), umfassend eine Abrollvorrichtung (3) für eine Unterfolienbahn (4) und eine Folientransportvorrichtung (5) zum intermittierenden Transport der Unterfolienbahn (4) mittels Klammerketten (6) in einer Produktionsrichtung (P), **dadurch gekennzeichnet, dass** eine Halteleiste (10) für die Unterfolienbahn (4) in einem Einzugsbereich (B) der Klammerketten (6) vorgesehen ist, die dazu konfiguriert ist, einen Teil eines freien vorderen Endes (E) einer neu zuzuführenden Unterfolienbahn (4) zu halten, während und/oder bis die Unterfolienbahn (4) von den Klammerketten (6) erfasst und transportiert wird.

2. Tiefziehverpackungsmaschine nach Anspruch 1, **dadurch gekennzeichnet, dass** die Halteleiste (10) wenigstens eine Haltetasche (15) aufweist, die mit einem Unterdruckerzeuger (12) verbunden ist, um einen die Haltetasche (15) abdeckenden Abschnitt der Unterfolienbahn (4) mittels Unterdruck an der Halteleiste (10) zu halten.

3. Tiefziehverpackungsmaschine nach Anspruch 2, **dadurch gekennzeichnet, dass** zwischen dem Unterdruckerzeuger (12) und der Halteleiste (10) ein Ventil (20) vorgesehen ist.

4. Tiefziehverpackungsmaschine nach einem der Ansprüche 2 oder 3, **dadurch gekennzeichnet, dass** die Haltetasche (15) als längliche Nut ausgeführt ist.

5. Tiefziehverpackungsmaschine nach einem der vorigen Ansprüche, **dadurch gekennzeichnet, dass** ein Niederhalter (13) zum Führen der Unterfolienbahn (4) an die wenigstens eine Haltetasche (15) der Halteleiste (10) hin vorgesehen ist.

6. Tiefziehverpackungsmaschine nach einem der Ansprüche 2 bis 5, **dadurch gekennzeichnet, dass** die Halteleiste (10) eine um wenigstens eine Haltetasche (15) umlaufende Dichtung (18) umfasst.

7. Tiefziehverpackungsmaschine nach einem der vorigen Ansprüche, **dadurch gekennzeichnet, dass** eine beidseitige Umlenkführung (9) zum Zuführen der Unterfolienbahn (4) in Produktionsrichtung (P) stromaufwärts der Halteleiste (10) vorgesehen ist.
